(19) **Europäisches Patentamt European Patent Office Office européen des brevets**

(11) **EP 3 831 616 B1**

(12) **FASCICULE DE BREVET EUROPEEN**

(45) Date de publication et mention
de la délivrance du brevet:
**24.08.2022 Bulletin 2022/34**

(21) Numéro de dépôt: **20315470.3**

(22) Date de dépôt: **01.12.2020**

(51) Classification Internationale des Brevets (IPC):
**B60B 33/00** (2006.01)   **B62B 5/04** (2006.01)
**B60B 33/04** (2006.01)

(52) Classification Coopérative des Brevets (CPC):
**B60B 33/045; B60B 33/0078; B60B 33/0089;**
B60B 33/0049; B60B 33/0068

(54) **ROULETTE ANTIRETOUR**

RAD MIT RÜCKLAUFSPERRE

CASTOR WITH BACKSTOP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.12.2019 FR 1913831**

(43) Date de publication de la demande:
**09.06.2021 Bulletin 2021/23**

(73) Titulaire: **TENTE ROULETTES
POLYMERES-BRUANDET
39700 La Barre (FR)**

(72) Inventeurs:
• **Dayt, Patrick
25000 Besancon (FR)**
• **Moya, Jean-Yves
25170 Lavernay (FR)**

(74) Mandataire: **Flavenot, Bernard
ABRITT
17, rue du Docteur Charcot
91290 La Norville (FR)**

(56) Documents cités:
WO-A1-2008/007050    FR-A1- 3 049 217
US-A- 4 503 943    US-A- 5 881 846
US-B1- 9 937 750

**Description**

La présente invention concerne les roulettes antiretour qui trouvent une application particulièrement avantageuse pour le déplacement de meubles de toute nature qui, après leur mise en place, doivent être maintenus dans cette place, au moins temporairement.

On connaît déjà des roulettes antiretour, par exemple celles qui sont décrites dans le brevet FR3049217 au nom de la Demanderesse et dans la demande internationale WO-2008007050.

Il peut aussi être fait référence, pour définir l'art antérieur, au brevet US 4 503 943. La structure de roulette selon le premier document cité donne de très bons résultats, mais présente l'inconvénient de n'empêcher la rotation de la roue, ou des roues, de la roulette que dans un seul sens de rotation. Quant au second document cité ci-dessus, il décrit une structure de roulette qui permet de bloquer la roue, ou les roues, dans les deux sens, mais sa conception est très complexe ce qui la rend très difficile à assembler et lui confère indéniablement un prix de revient très élevé. Cette roulette antérieure est de plus relativement difficile à utiliser.

Il en est de même pour le brevet US cité ci-dessus.

Aussi, la présente invention a-t-elle pour but de réaliser une roulette antiretour présentant une structure très simple qui, à la demande, lui permet aisément de bloquer la roue, ou les roues, dans l'un ou l'autre des deux sens de rotation.

Plus précisément, la présente invention a pour objet une roulette dite « roulette antiretour » pour des déplacements sur un sol, selon au moins l'une des revendications annexées.

D'autres caractéristiques et avantages de la présente invention apparaîtront au cours de la description suivante donnée en regard des dessins annexés à titre illustratif, mais nullement limitatif, dans lesquels :

- La figure 1 représente, en vue de côté, le schéma de principe et explicatif de la structure de la roulette antiretour selon l'invention, cette représentation de la structure de la roulette étant partielle et les autres figures 2 à 4 permettant de la compléter,
- La figure 2 représente, en vue de côté, un mode de réalisation industriel possible de la roulette selon l'invention, la roulette étant dans une de ses deux configurations possibles,
- La figure 3 représente, en vue de côté et dans le même mode de réalisation que celui illustré sur la figure 2, la roulette selon l'invention dans l'autre de ses deux configurations possibles,
- La figure 4 représente une vue en coupe axiale de la roulette référencée III-III sur les figures 2 et 3.

Il est tout d'abord précisé que, dans la présente description, si l'adverbe "sensiblement" est associé à un qualificatif d'un moyen donné, ce qualificatif doit être compris au sens strict ou approché.

La présente invention est relative à une roulette dite « roulette antiretour » de structure très simple dont la roue, ou les roues, peuvent être bloquées, au choix, dans l'un et l'autre sens de rotation, avec un minimum d'intervention.

Une telle roulette est prévue pour permettre à des meubles de se déplacer ou d'être déplacés, étant entendu que par meuble il est compris tous objets, corps, etc., qui ne sont pas liés de façon définitive à un sol fixe.

La roulette en référence aux quatre figures annexées comporte un carter de roue 10 et des moyens de fixation du carter 10 sur un meuble selon un axe de fixation 11 qui est sensiblement perpendiculaire au sol So. Ces moyens de fixation sont connus, par exemple un pivot.

La roulette comporte au moins une roue 20 (de préférence deux comme illustré) présentant une bande de roulement 21, la roue ayant un rayon hors tout de valeur Rr, et des moyens pour monter cette roue 20 en rotation sur un arbre 22 définissant un axe de rotation 23 de façon que la roue soit apte à prendre contact sur le sol en au moins un point de contact 24 de la bande de roulement 21 (en fait sensiblement un segment), ce point de contact étant situé dans un plan 25 dit « plan médian 25 » qui contient l'axe de rotation 23 et qui est sensiblement parallèle à l'axe de fixation 11 défini ci-avant.

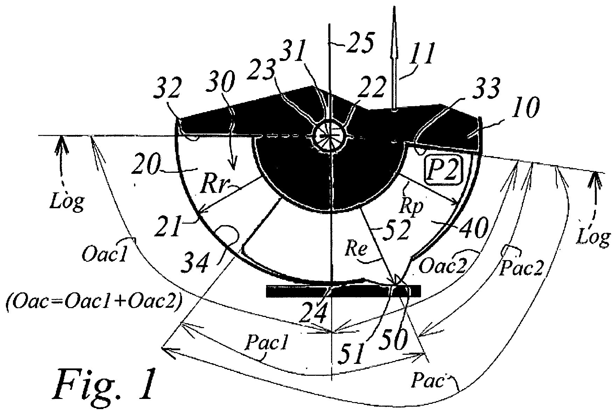

La roulette selon l'invention comporte, plus particulièrement en référence à la figure 1, un logement 30 réalisé dans le carter 10, ce logement présentant la forme sensiblement d'un secteur de cylindre creux dont l'axe de cylindre 31 est sensiblement parallèle à l'axe de rotation 23. Ce logement 30 est en outre bordé par deux parois d'extrémité 32, 33 formant butées, dont la fonctionnalité sera définie ci-après, ces deux parois d'extrémités 32, 33 définissant un angle au centre de valeur Log dont le sommet est situé sur l'axe de cylindre 31.

De plus, ce logement 30 comporte une ouverture 34, en arc de cercle ou analogue, qui est en regard du sol sur lequel la roue est apte à rouler. Cette ouverture 34 est définie sur un angle au centre dont le sommet est situé sur l'axe de cylindre 31 et ayant une valeur déterminée Oac correspondant à la somme de deux angles au centre de valeurs Oac1 et Oac2 dont les sommets sont situés sur l'axe de cylindre 31, ces deux angles au centre étant contigus selon le plan médian 25.

La roulette comporte, toujours plus particulièrement en référence à la figure 1, une pièce 40 présentant la forme d'un secteur de cylindre plein défini sur un angle au centre de valeur Pac dont le sommet est préférentiellement situé sur l'axe de cylindre 31, le rayon hors tout de cette pièce 40 ayant une valeur Rp qui est au plus égale à la valeur Rr, et une excroissance 50 réalisée sur la tranche 41 de la pièce 40 qui fait face à l'ouverture 34, cette excroissance étant définie sur un angle au centre dont le sommet est situé sur l'axe de cylindre 31 et dont la valeur est très inférieure à la valeur Pac de l'angle au centre de la pièce 40. Cette excroissance 50 comporte un sommet 51 distant de l'axe de cylindre 31 de la valeur Re et défini dans un plan 52 passant par l'axe de cylindre 31, dit « plan d'excroissance 52 », ce plan d'excroissance 52 séparant l'angle au centre de valeur Pac en deux angles au centre qui ont des valeurs respectives Pac1 et Pac2 qui sont donc séparés par ce plan d'excroissance.

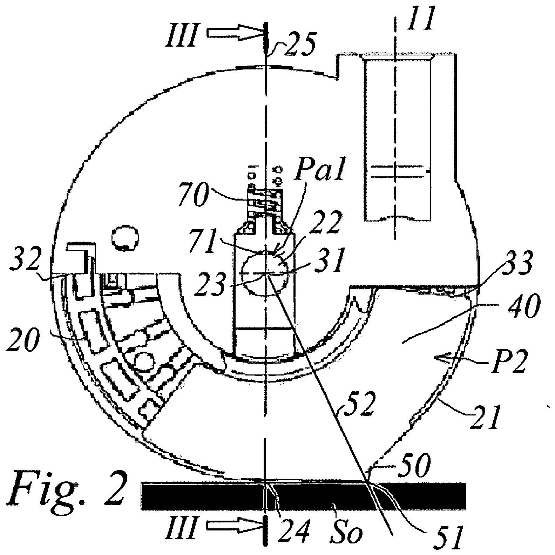

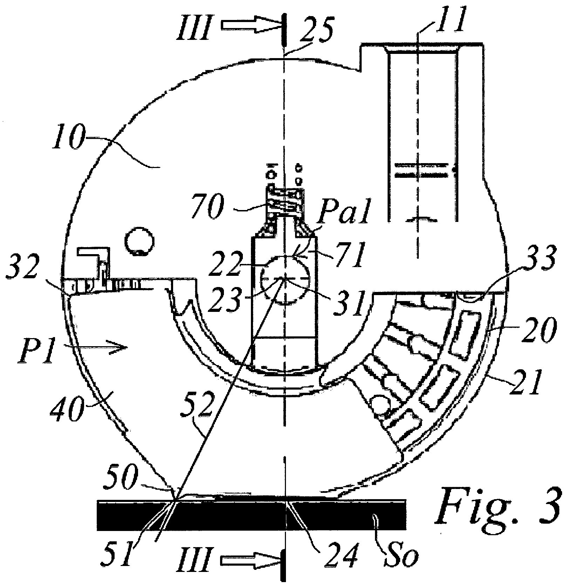

La roulette comporte en outre des moyens pour monter la pièce 40 sur le carter 10 de façon qu'elle soit apte à se déplacer dans le logement 30 en pivotant de façon sensiblement libre autour de l'axe de cylindre 31 pour prendre deux positions extrêmes P1, P2, une première position P1 (figure 3) lorsqu'elle est en butée sur l'une 32 des deux parois d'extrémité 32, 33 et une seconde position P2 (figure 2) lorsqu'elle est en butée contre l'autre 33 des deux parois d'extrémité.

Selon une caractéristique préférée de l'invention, les valeurs définies ci-dessus, à savoir Pac, Pac1, Pac2, Oac, Oac1, Oac 2, Log, Re et Rr sont liées par les relations suivantes :

- $$Pac = Pac1 + Pac2 \; ;$$

- $$Oac = Oac1 + Oac2 \; ;$$

- $$Oac \leq Log \; ;$$

- $$Log - Pac < Pac1 \; ;$$

- $$Log - Pac < Pac2 \; ;$$

- $$Re > Rr.$$

Selon une caractéristique très préférentielle de l'invention, pour obtenir une réalisation qui soit la plus industrielle possible, les valeurs Oac1 et Oac2 sont égales, de même que les valeurs Pac1 et Pac2.

Selon une autre caractéristique très préférentielle de l'invention, de façon à faciliter le fonctionnement et l'utilisation la roulette, la pièce 40 a une section axiale sensiblement complémentaire de celle du logement en creux 30, ou est dimensionnée, de façon à pouvoir être montée dans le logement 30 au contact, par frottement doux, de la roue 20.

De préférence, pour obtenir un fonctionnement fiable de la roulette comme explicité ci-après, l'excroissance 50 présente la forme d'un coin dont l'arête de sommet 51 est sensiblement parallèle à l'axe de cylindre 31.

En outre, pour favoriser l'utilisation de la roulette selon l'invention, c'est-à-dire obtenir facilement l'une ou l'autre de ses deux configurations (figures 2 et 3), à savoir un antiretour dans l'un ou l'autre des deux sens de rotation de la roue 20, la roulette comporte des moyens pour déplacer l'arbre 22 parallèlement à son axe de rotation 23 et sensiblement dans le plan médian 25, de façon que son axe de rotation puisse prendre toutes positions entre deux positions extrêmes Pa1, Pa2 La première position extrême Pa1 est celle dans laquelle l'axe de rotation 23 est le plus éloigné du sol So sur lequel la roue 20 est apte à rouler, la seconde position extrême Pa2 étant celle dans laquelle cet axe de rotation est le plus proche du sol sur lequel la roue est apte à rouler, la distance Dp séparant ces deux positions extrêmes étant au moins égale à la différence entre les valeurs Re et Rp définies ci-avant.

En outre, il est tout particulièrement avantageux que la roulette comporte des moyens pour tendre à amener l'arbre 22 de façon que l'axe de rotation 23 revienne constamment dans sa seconde position Pa2 s'il s'en était éloigné.

De façon avantageuse, les moyens pour tendre à amener l'arbre 22 de façon que l'axe de rotation 23 soit dans sa seconde position Pa2 sont avantageusement constitués par un ressort 70 interposé entre le carter 10 et l'arbre 22. A noter que, dans le mode de réalisation illustré, le ressort 70 est monté pour agir en compression, et non pas en traction.

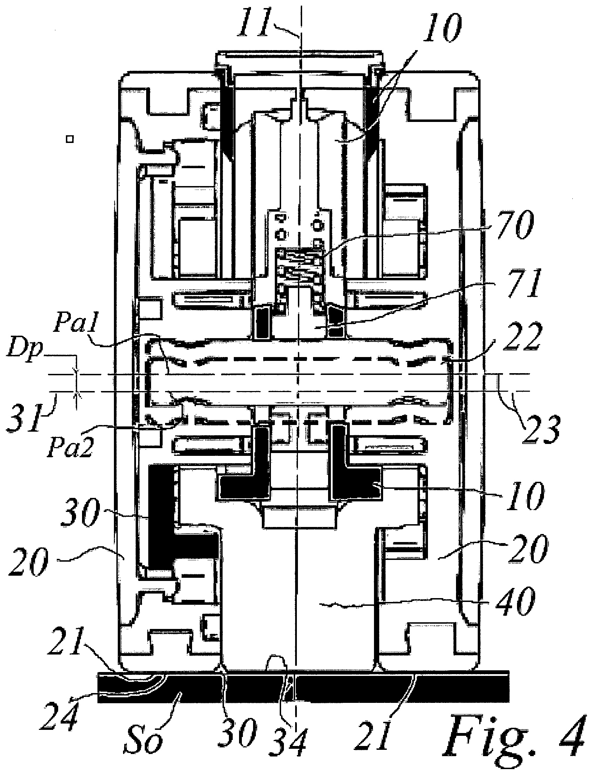

De façon préférentielle, pour faciliter l'assemblage de la roulette, celle-ci comporte une cassette 71, figures 2 à 4, interposée entre le ressort 70 et l'arbre 22, ce dernier passant dans cette cassette par une percée traversante.

De plus, pour un fonctionnement optimum et une utilisation facile de la roulette, cette dernière est configurée de façon l'axe de rotation 23 et l'axe de cylindre 31 soient sensiblement confondus quand l'axe de rotation est dans sa seconde position Pa2.

Très préférentiellement, la valeur de l'angle au centre Oac de l'ouverture 34 est au moins égale, sinon strictement égale, à la somme des valeurs Pac1 et Pac2 qui ont été précédemment définies. De façon encore plus avantageuse dans le cas d'une réalisation industrielle, Oac est égale à Log, figures 1 à 3.

La roulette selon l'invention telle que décrite ci-dessus, et dont un mode de réalisation préféré est illustré sur les figures 2 à 4, fonctionne et s'utilise comme explicité ci-après. Cette description est donnée en référence aux figures 2 et 3 sur lesquelles le plan médian 25 définit un demi-espace droit et un demi-espace gauche. De plus, la roulette est supposée être associée à un meuble pesant qui agit donc sur le ressort 70 pour le comprimer.

Il est tout d'abord supposé que la roulette est dans sa configuration qui est illustrée sur la figure 2, c'est-à-dire dans laquelle la pièce 40 est dans sa seconde position extrême P2. L'excroissance 50 est située dans le demi-espace à droite du plan médian 25.

Dans cette configuration, l'arbre 22 est dans une position dans laquelle son axe de rotation 23 occupe sa première position Pa1, et l'excroissance 50 est en dehors de la surface cylindrique de révolution qui enveloppe la roue 20.

Dans cette position, cette excroissance 50 ayant une fonction de cale empêche la roue 20 de pivoter dans le sens dextrorsum. Le meuble associé à la roulette ne peut donc pas se déplacer vers la droite. En revanche, la roue 20 peut tourner dans le sens senestrorsum et permettre le déplacement du meuble vers la gauche, l'excroissance 50 glissant sur le sol.

Si l'utilisateur de la roulette veut empêcher le meuble de se déplacer vers la gauche, il doit amener la roulette dans sa configuration illustrée sur la figure 3. Pour ce faire, il soulage la charge qui s'applique sur la roulette par exemple en soulevant légèrement le meuble, et fait tourner la pièce 40 pour l'amener dans sa première position extrême P1 dans laquelle l'excroissance 50 est située dans le demi-espace à gauche du plan médian 25. L'utilisateur repose alors le meuble, ce qui a pour effet de comprimer à nouveau le ressort 70 et donc de déplacer l'arbre 22 de façon que son axe 23 reprenne sa première position Pa1 et de faire ressortir l'excroissance 50 en dehors du volume cylindrique qui enveloppe la roue 20.

Le fonctionnement décrit ci-dessus est plus théorique que réel. En effet, une roulette selon l'invention n'est pas utilisée pour faire réellement rouler le meuble, mais pour l'empêcher de se déplacer dans un sens ou dans l'autre. Pour ce faire, le meuble est porté par des roulettes classiques, par exemple au nombre de trois, dont les roues ne sont pas soumises à la force de poussée d'un ressort. A ces trois roulettes est alors associée une roulette selon l'invention, par exemple au centre du triangle qui passe par les trois roulettes, le ressort 70 étant détendu, au moins partiellement, pour que les roues 20 de la roulette selon l'invention reposent sur le sol So. Ainsi, quand la roulette doit passer un obstacle présent sur le sol, il suffit de forcer le passage en exerçant par exemple une force de poussée sur le meuble. Les roues 20 de la roulette selon l'invention rentrent alors vers le carter 10 en comprimant le ressort 70 et permettent à la pièce 40 de passer l'obstacle et éventuellement passer de l'une de ses deux positions P1, P2 à l'autre pour empêcher le meuble de se déplacer dans un sens ou dans l'autre.

Bien entendu, les deux cas exposés ci-dessus, notamment le second, ne sont que des exemples particuliers pour mettre en évidence l'intérêt de la présente invention. D'autres exemples pourraient être donnés, mais ils ne seront pas décrits ici, car ils sont du domaine de l'homme du métier.

Il est à noter que le passage de la pièce 40 de sa position P1 à sa position P2, et réciproquement, peut se faire en agissant directement sur elle. Mais il est aussi possible, du fait du frottement doux qui se produit entre la roue 20 et la pièce 40, de faire passer cette pièce 40 de sa position P1 à P2, et réciproquement, en faisant tourner la roue de quelque façon que ce soit, par exemple en la faisant rouler sur le sol So quand l'axe 23 de l'arbre 22 est dans sa position Pa2, ce qui est tout à fait possible car l'excroissance 50 est dans ce cas comprise dans le volume cylindrique de révolution qui enveloppe la roue 20.

Il a été décrit ci-dessus le fonctionnement de la roulette selon l'invention avec un seule roue, mais il est bien évident que ce fonctionnement est le même pour une roulette comportant deux roues symétriques 20 montées un même carter 10, comme illustré, d'autant plus que la pièce 40 est située entre ces deux roues 20 et agit simultanément de la même façon sur elles.

Une telle roulette trouve une application particulièrement intéressante pour le déplacement d'objets (ou meubles) qui doivent être déplacés par rapport à une base, soit dans un sens soit dans l'autre par rapport à cette base, et qui, après avoir été déplacés, doivent demeurer fixes au moins pendant un temps déterminé avant d'être ramenés vers la base. Une telle application est par exemple celle qui nécessite le déploiement de deux toiles ou analogues (type drapeaux) qui sont contenues, par exemple enroulées, dans la base et qui doivent être déroulées de part et d'autre de cette base pendant une durée déterminée, par exemple pour des expositions.

**Revendications**

**1.** Roulette dite « roulette antiretour » pour des déplacements sur un sol (So), comportant :

• un carter de roue (10),

• des moyens de fixation dudit carter (10) sur un meuble selon un axe de fixation (11) qui est sensiblement perpendiculaire audit sol (So),

• au moins une roue (20) présentant une bande de roulement (21), ladite roue ayant un rayon hors tout de valeur Rr, et

• des moyens pour monter ladite roue (20) en rotation sur un arbre (22) définissant un axe de rotation (23) et de façon que ladite roue soit apte à prendre contact sur le sol en au moins un point de contact (24) de ladite bande de roulement (21), ce point de contact étant situé dans un plan (25) dit « plan médian (25) » qui contient ledit axe de rotation (23) et qui est sensiblement parallèle au dit axe de fixation (11),

• un logement (30) réalisé dans ledit carter (10), ledit logement présentant la forme d'un secteur de cylindre creux dont l'axe de cylindre (31) est sensiblement parallèle au dit axe de rotation (23), ledit logement (30) étant en outre bordé par deux parois d'extrémité (32, 33) formant butées, ces deux parois d'extrémités (32, 33) définissant un angle au centre de valeur Log dont le sommet est situé sur ledit axe de cylindre (31), ledit logement (30) comportant une ouverture (34) qui est en regard du sol sur lequel la roue est apte à rouler, ladite ouverture (34) étant définie sur un angle au centre dont le sommet est situé sur ledit axe de cylindre (31) et ayant une valeur déterminée Oac correspondant à la somme de deux angles au centre de valeurs Oac1 et Oac2 dont les sommets sont situés sur ledit axe de cylindre (31), ces deux angles au centre étant contigus selon ledit plan médian (25),

**caractérisée par le fait qu'elle comporte en outre**

• une pièce (40) présentant la forme d'un secteur de cylindre plein défini sur un angle au centre de valeur Pac dont le sommet est situé sur ledit axe de cylindre (31), le rayon hors tout de cette pièce (40) ayant une valeur Rp qui est au plus égale à ladite valeur Rr,

• une excroissance (50) réalisée sur la tranche (41) de la pièce (40) qui fait face à l'ouverture (34), ladite excroissance étant définie sur un angle au centre dont le sommet est situé sur ledit axe de cylindre (31) et dont la valeur est très inférieure à la valeur Pac de l'angle au centre de la pièce (40), ladite excroissance (50) comportant un sommet (51) distant dudit axe de cylindre (31) de la valeur Re et défini dans un plan (52) passant par ledit axe de cylindre (31), dit « plan d'excroissance (52) », ledit plan d'excroissance (52) séparant l'angle au centre de valeur Pac en deux angles au centre de valeurs respectives Pac1 et Pac2 séparés par ce dit plan d'excroissance, et

• des moyens pour monter ladite pièce (40) sur le carter (10) de façon qu'elle soit apte à se déplacer dans ledit logement (30) en pivotant de façon sensiblement libre autour dudit axe de cylindre (31) pour prendre deux positions extrêmes (P1, P2), une première position (P1) lorsqu'elle est en butée sur l'une (32) des deux parois d'extrémité (32, 33) et une seconde position (P2) lorsqu'elle est en butée contre l'autre (33) des deux parois d'extrémité.

2. Roulette selon la revendication 1, **caractérisée par le fait que** les valeurs Pac, Pac1, Pac2, Oac, Oac1, Oac 2, Log, Re et Rr sont liées par les relations suivantes :

$$Pac = Pac1 + Pac2 \; ; \; Oac = Oac1 + Oac2 \; ; \; Oac \leq Log \; ;$$

$$Log - Pac < Pac1 \; ; \; Log - Pac < Pac2 \; ; \; Re > Rr.$$

3. Roulette selon l'une des revendications 1 et 2, **caractérisée par le fait que** les valeurs Oac1 et Oac2 sont égales, et que les valeurs Pac1 et Pac2 sont égales.

4. Roulette selon l'une des revendications 1 à 3, **caractérisée par le fait que** ladite pièce (40) a une section axiale sensiblement complémentaire de celle du logement en creux (30).

5. Roulette selon l'une des revendications précédentes, **caractérisée par le fait que** l'excroissance (50) présente la forme d'un coin dont l'arête de sommet (51) est sensiblement parallèle audit axe de cylindre (31).

6. Roulette selon l'une des revendications précédentes, **caractérisée par le fait qu'**elle comporte en outre des moyens pour déplacer ledit arbre (22) parallèlement à son axe de rotation (23) et sensiblement dans le plan médian (25), de façon que son axe de rotation puisse prendre toutes positions entre deux positions extrêmes (Pa1, Pa2), la première position extrême (Pa1) étant celle dans laquelle ledit axe de rotation est le plus éloigné du sol (So) sur lequel la roue (20) est apte à rouler, la seconde position extrême (Pa2) étant celle dans laquelle ledit axe de rotation est le plus proche du sol sur lequel la roue est apte à rouler, la distance Dp séparant ces deux positions extrêmes étant au moins égale à la différence entre les valeurs Re et Rp.

7. Roulette selon la revendication 6, **caractérisée par le fait qu'**elle comporte des moyens pour tendre à amener ledit arbre (22) de façon que ledit axe de rotation (23) soit dans sa seconde position (Pa2).

8. Roulette selon la revendication 7, **caractérisée par le fait que** les moyens pour tendre à amener ledit arbre (22) de façon que ledit axe de rotation soit dans sa seconde position (Pa2) sont constitués par un ressort (70) interposé entre ledit carter (10) et ledit arbre (22), ledit ressort agissant en compression.

9. Roulette selon la revendication 8, **caractérisée par le fait qu'**elle comporte une cassette (71) interposée entre ledit ressort (70) et ledit arbre (22).

10. Roulette selon l'une des revendications 6 à 9, **caractérisée par le fait que** l'axe de rotation (23) et l'axe de cylindre (31) sont sensiblement confondus quand ledit axe de rotation est dans sa seconde position (Pa2).

11. Roulette selon l'une des revendications précédentes, **caractérisée par le fait que** ladite pièce (40) est montée dans le logement (30) en frottement doux contre ladite roue (20).

12. Roulette selon l'une des revendications précédentes, **caractérisée par le fait que** ladite ouverture (34) est définie sur un angle au centre dont le sommet est situé sur ledit axe de cylindre (31), ledit angle au centre ayant une valeur Oac au moins égale à la somme des valeurs Pac1 et Pac2.

13. Roulette selon la revendication 12, **caractérisée par le fait que** la valeur Oac est égale à la valeur Log.


**Patentansprüche**

1. Rollrädchen, genannt "Rollrädchen mit Rücklaufsperre", zur Fortbewegung auf einem Boden (So), umfassend:

   - ein Radgehäuse (10),
   - Mittel zur Befestigung des Gehäuses (10) an einem Möbelstück entlang einer Befestigungsachse (11), die im Wesentlichen senkrecht zum Boden (So) verläuft,
   - mindestens ein Rad (20) mit einer Lauffläche (21), wobei das Rad einen Gesamtradius mit Wert Rr aufweist, und
   - Mittel zum Montieren des Rades (20) zur Drehung auf einer Welle (22), die eine Drehachse (23) definiert, und so, dass das Rad in der Lage ist, den Boden an mindestens einem Kontaktpunkt (24) der Lauffläche (21) zu berühren, wobei dieser Kontaktpunkt (24) in einer Ebene (25), die "Medianebene (25)" genannt wird, sich befindet, die die Drehachse (23) aufnimmt und die zu der Befestigungsachse (11) im Wesentlichen parallel ist,
   - eine Aufnahme (30), die in dem Gehäuse (10) ausgebildet ist, wobei die Aufnahme die Form eines hohlen Zylindersektors aufweist, dessen Zylinderachse (31) im Wesentlichen parallel zu der Drehachse (23) ist, wobei die Aufnahme (30) ferner von zwei Stirnwänden (32, 33) begrenzt ist, die Anschläge bilden, wobei diese beiden Stirnwände (32, 33) einen Winkel in der Mitte des Log-Wertes definieren, dessen Scheitelpunkt auf der Zylinderachse (31) liegt, wobei die Aufnahme (30) eine Öffnung (34) aufweist, die dem Boden zugewandt ist, auf dem das Rad rollen kann, wobei die Öffnung (34) über einen zentralen Winkel definiert ist, dessen Scheitelpunkt sich auf der Zylinderachse (31) befindet und der einen bestimmten Wert Oac besitzt, der der Summe der beiden Winkel mit Werten Oac1 und Oac2, deren Scheitelpunkte auf der Zylinderachse (31) liegen, entspricht, wobei diese beiden zentralen Winkel in der Medianebene (25) aneinander angrenzen,

   **dadurch gekennzeichnet, dass** es ferner Folgendes umfasst:

   - ein Teil (40), das die Form eines vollen Zylindersektors aufweist, der auf einem Winkel im Zentrum des Pac-Wertes definiert ist, dessen Scheitelpunkt auf der Zylinderachse (31) liegt, wobei der Gesamtradius dieses Teils (40) einen Wert Rp hat, der höchstens gleich dem genannten Wert Rr ist,
   - eine Ausstülpung (50) an der Kante (41) des Teils (40), die der Öffnung (34) zugewandt ist, wobei die Ausstülpung über einen zentralen Winkel definiert ist, dessen Scheitelpunkt auf der Zylinderachse (31) liegt und dessen Wert viel kleiner ist als der Wert Pac des Winkels in der Mitte des Stücks (40), wobei die Ausstülpung (50) einen von der Zylinderachse (31) entfernten Scheitel (51) mit dem Wert Re besitzt, der in einer Ebene (52) definiert ist, die durch die Zylinderachse (31) verläuft und "Auswuchsebene (52)" genannt wird, wobei die Auswuchsebene (52) den zentralen Winkel mit Wert Pac in zwei zentrale Winkel mit Werten Pac1 bzw. Pac2 teilt, die durch diese Auswuchsebene getrennt sind, und

- Mittel zum Befestigen des Teils (40) an dem Gehäuse (10), so dass es in der Lage ist, sich in der Aufnahme (30) zu bewegen, indem es im Wesentlichen frei um die Zylinderachse (31) schwenkt, um zwei Endpositionen (P1, P2) einzunehmen, wobei eine erste Position (P1), wenn es an einer (32) der beiden Stirnwände (32, 33) anliegt, und eine zweite Position (P2), wenn es an der anderen (33) der beiden Stirnwände anliegt, gegeben ist

2. Rollrädchen nach Anspruch 1, **dadurch gekennzeichnet, dass** die Werte Pac, Pac1, Pac2, Oac, Oac1, Oac2, Log, Re und Rr durch die folgenden Beziehungen verknüpft sind: Pac = Pac1 + Pac2; Oac = Oac1 + Oac2; Oac ≤ Log; Log - Pac < Pac1; Log - Pac < Pac2; Re > Rr.

3. Rollrädchen nach einem der Ansprüche 1 oder 2, **dadurch gekennzeichnet, dass** die Werte Oac1 und Oac2 gleich sind und dass die Werte Pac1 und Pac2 gleich sind.

4. Rollrädchen nach einem der Ansprüche 1 bis 3, **dadurch gekennzeichnet, dass** das Teil (40) einen axialen Querschnitt hat, der zu der der vertieften Aufnahme (30) im Wesentlichen komplementär ist.

5. Rollrädchen nach einem der vorhergehenden Ansprüche, **dadurch gekennzeichnet, dass** die Ausstülpung (50) die Form eines Keils aufweist, dessen Scheitelpunkt (51) im Wesentlichen parallel zur Zylinderachse (31) verläuft.

6. Rollrädchen nach einem der vorhergehenden Ansprüche, **dadurch gekennzeichnet, dass** ferner Mittel vorgesehen sind zum Bewegen der Welle (22) parallel zu ihrer Drehachse (23) und im Wesentlichen in der Medianebene (25), so dass die Drehachse jede Position zwischen zwei Extrempositionen (Pa1, Pa2) einnehmen kann, wobei die erste Extremposition (Pa1) diejenige ist, in der die Drehachse am weitesten von dem Boden (So) entfernt ist, auf dem das Rad (20) rollen kann, und die zweite Extremposition (Pa2) diejenige ist, in der die Drehachse dem Boden am nächsten ist, auf dem das Rad rollen kann, wobei der Abstand Dp, der diese beiden Extrempositionen voneinander trennt, mindestens gleich der Differenz zwischen den Werten Re und Rp ist.

7. Rollrädchen nach Anspruch 6, **dadurch gekennzeichnet, dass** Mittel vorgesehen sind, um die Welle (22) so zu führen, dass sich die Drehachse (23) in ihrer zweiten Position (Pa2) befindet.

8. Rollrädchen nach Anspruch 7, **dadurch gekennzeichnet, dass** die Mittel zum Führen der Welle (22), so dass die Drehachse in ihrer zweiten Position (Pa2) ist, durch eine Feder (70) gebildet werden, die zwischen dem Gehäuse (10) und der Welle (22) angeordnet ist, wobei die Feder auf Kompression wirkt.

9. Rollrädchen nach Anspruch 8, **dadurch gekennzeichnet, dass** sie eine Kassette (71) aufweist, die zwischen der Feder (70) und der Welle (22) angeordnet ist.

10. Rollrädchen nach einem der Ansprüche 6 bis 9, **dadurch gekennzeichnet, dass** die Drehachse (23) und die Zylinderachse (31) im Wesentlichen zusammenfallen, wenn die Drehachse in ihrer zweiten Position (Pa2) ist.

11. Rollrädchen nach einem der vorhergehenden Ansprüche, **dadurch gekennzeichnet, dass** das Teil (40) in der Aufnahme (30) mit sanfter Reibung gegen das Rad (20) montiert ist.

12. Rollrädchen nach einem der vorhergehenden Ansprüche, **dadurch gekennzeichnet, dass** die Öffnung (34) auf einen zentralen Winkel festgelegt ist, dessen Scheitelpunkt auf der Zylinderachse (31) liegt, wobei der zentrale Winkel einen Oac-Wert hat, der mindestens gleich der Summe der Werte Pac1 und Pac2 ist.

13. Rollrädchen nach Anspruch 12, **dadurch gekennzeichnet, dass** der Oac-Wert gleich dem Log-Wert ist.

**Claims**

1. A castor known as a "reverse locking castor" for movements over ground (So), comprising:

    • a wheel casing (10),

• means for mounting said casing (10) on a piece of furniture along a mounting axis (11) which is substantially perpendicular to said ground (So),

• at least one wheel (20) having a tread (21), said wheel having an overall radius with a value Rr, and

• means for mounting said wheel (20) in rotation on a shaft (22) defining an axis of rotation (23) and in a manner such that said wheel is capable of making contact with the ground at at least one point of contact (24) of said tread (21), this point of contact being located in a plane (25) known as the "median plane (25)" which contains said axis of rotation (23) and which is substantially parallel to said mounting axis (11),

• a housing (30) produced in said casing (10), said housing being in the shape of a hollow sector of a cylinder the cylinder axis (31) of which being substantially parallel to said axis of rotation (23), said housing (30) additionally being bordered by two end walls (32, 33) forming abutments, these two end walls (32, 33) defining an angle at the centre with a value Log the vertex of which being situated on said cylinder axis (31), said housing (30) comprising an opening (34) which is opposite the ground on which the wheel is capable of rolling, said opening (34) being defined over an angle at the centre the vertex of which is situated on said cylinder axis (31) and having a specific value Oac corresponding to the sum of two angles at the centre with values Oac1 and Oac2 the vertices of which are situated on said cylinder axis (31), these two angles at the centre being contiguous along said median plane (25),

**characterized in that it further comprises**

• a part (40) which is in the shape of a solid cylinder sector defined over an angle at the centre with a value Pac the vertex of which is situated on said cylinder axis (31), the overall radius of this part (40) having a value Rp which is at most equal to said value Rr,

• a protuberance (50) produced on the edge (41) of the part (40) which faces the opening (34), said protuberance being defined over an angle at the centre the vertex of which is situated on said cylinder axis (31) and the value of which is much smaller than the value Pac of the angle at the centre of the part (40), said protuberance (50) comprising a vertex (51) which is at a distance from said cylinder axis (31) by the value Re and defined in a plane (52) passing through said cylinder axis (31), known as a "protuberance plane (52)", said protuberance plane (52) separating the angle at the centre with value Pac into two angles at the centre with respective values Pac1 and Pac2 separated by said protuberance plane, and

• means for mounting said part (40) on the housing (10) so that it is capable of moving in said housing (30) by pivoting substantially freely about said cylinder axis (31) in order to take up two extreme positions (P1, P2), a first position (P1) when it abuts against one (32) of the two end walls (32, 33) and a second position (P2) when it abuts against the other (33) of the two end walls.

2. The castor as claimed in claim 1, **characterized in that** the values Pac, Pac1, Pac2, Oac, Oac1, Oac 2, Log, Re and Rr are related by the following relationships:

$$Pac = Pac1 + Pac2; \quad Oac = Oac1 + Oac2; \quad Oac \leq Log;$$

$$Log - Pac < Pac1; \quad Log - Pac < Pac2; \quad Re > Rr.$$

3. The castor as claimed in claim 1 or claim 2, **characterized in that** the values Oac1 and Oac2 are equal, and **in that** the values Pac1 and Pac2 are equal.

4. The castor as claimed in one of claims 1 to 3, **characterized in that** said part (40) has an axial section which is substantially complementary to that of the hollow housing (30).

5. The castor as claimed in one of the preceding claims, **characterized in that** the protuberance (50) is in the shape of a wedge, the vertex edge (51) of which is substantially parallel to said cylinder axis (31).

6. The castor as claimed in one of the preceding claims, **characterized in that** it further comprises means for moving said shaft (22) parallel to its axis of rotation (23) and substantially in the median plane (25) so that its axis of rotation can assume any position between two extreme positions (Pa1, Pa2), the first extreme position (Pa1) being that in which said axis of rotation is furthest from the ground (So) on which the wheel (20) is capable of rolling, the second extreme position (Pa2) being that in which said axis of rotation is closest to the ground on which the wheel is capable of rolling, the distance Dp separating these two extreme positions being at least equal to the difference between the values Re and Rp.

7. The castor as claimed in claim 6, **characterized in that** it comprises means for biassing said shaft (22) in a manner such that said axis of rotation (23) is in its second position (Pa2).

8. The castor as claimed in claim 7, **characterized in that** the means for biassing said shaft (22) in a manner such that said axis of rotation is in its second position (Pa2) are constituted by a spring (70) interposed between said casing (10) and said shaft (22), said spring acting in compression.

9. The castor as claimed in claim 8, **characterized in that** it comprises a cartridge (71) interposed between said spring (70) and said shaft (22).

10. The castor as claimed in one of Claims 6 to 9, **characterized in that** the axis of rotation (23) and the cylinder axis (31) are substantially coincident when said axis of rotation is in its second position (Pa2).

11. The castor as claimed in one of the preceding claims, **characterized in that** said part (40) is mounted to fit snugly in the housing (30) against said wheel (20).

12. The castor as claimed in one of the preceding claims, **characterized in that** said opening (34) is defined over a central angle the vertex of which is situated on said cylinder axis (31), said central angle having a value Oac which is at least equal to the sum of the values Pac1 and Pac2.

13. The castor as claimed in Claim 12, **characterized in that** the value Oac is equal to the value Log.

Fig. 1

*Fig. 2*

*Fig. 3*

*Fig. 4*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3049217
- WO 2008007050 A
- US 4503943 A